# EUROPÄISCHE PATENTSCHRIFT

(11) **EP 4 342 752 B1**
(45) Veröffentlichungstag und Bekanntmachung des Hinweises auf die Patenterteilung: **24.12.2025**
(21) Anmeldenummer: 23191909.3
(22) Anmeldetag: 17.08.2023
(51) Int. Cl.: B60T 8/32, B60K 31/00

(54) **VORRICHTUNG UND VERFAHREN ZUM VERZÖGERN EINES FAHRZEUGS**
DEVICE AND METHOD FOR DECELERATING A VEHICLE
DISPOSITIF ET PROCÉDÉ DE DÉCÉLÉRATION D'UN VÉHICULE

(30) Priorität: 22.09.2022 DE 102022124423
(43) Veröffentlichungstag der Anmeldung: 27.03.2024
(73) Patentinhaber: Wacker Neuson Linz GmbH, 4063 Hörsching (AT)
(72) Erfinder: MAHRINGER, Stephan, 4113 Sankt Martin im Mühlkreis (AT)
(74) Vertreter: Müller Hoffmann & Partner

(56) Entgegenhaltungen:
- DE-A1- 102014 212 380
- DE-B4- 4 338 399

## Beschreibung

Die Erfindung betrifft eine Vorrichtung und ein Verfahren zum Verzögern eines Fahrzeugs.

Insbesondere betrifft die Erfindung eine Vorrichtung und ein Verfahren zum Verzögern (Abbremsen) von fahrbaren Maschinen durch Einstellen eines geeigneten Stützmoments (Verzögerungsmoments), das durch den Antrieb bereitgestellt wird. Bei dem Antrieb kann es sich insbesondere um einen Verbrennungsmotor mit damit gekoppeltem Hydrauliksystem oder um einen Elektroantrieb handeln.

Das Fahrzeug kann insbesondere ein Baufahrzeug, wie z.B. ein Dumper bzw. ein Muldenfahrzeug sein, das in der Lage ist, in seiner Mulde eine Last mit einer Masse zu transportieren, die größer ist als die Fahrzeugmasse selbst.

Im Schubbetrieb des Fahrzeugs kann der Verbrennungsmotor eine gewisse Bremsleistung aufgrund von Reibungsphänomenen etc. erzeugen. Eine ähnliche Bremsleistung kann bei Elektrofahrzeugen im generatorischen Betrieb durch Rekuperation bewirkt werden. Die dadurch mögliche Verzögerung im Schubbetrieb erlaubt ein komfortables Fahren des Fahrzeugs. Zusätzlich ist eine z.B. über ein Bremspedal betätigbare Betriebsbremse vorgesehen, die im Bedarfsfall die eigentliche Bremswirkung bereitstellt und das Fahrzeug z.B. bis zum Stillstand bremsen kann oder eine stärkere Abbremsung ermöglicht.

Je nach Zustand und Fahrzustand des Fahrzeugs (Hangneigung, Geschwindigkeit, Getriebeübersetzung, Fahrzeuggewicht, Lastgewicht etc.) stellt sich dabei eine gewisse Verzögerung des Fahrzeugs im Schubbetrieb ein. Bei Fahrzeugen mit großem Differenzgewicht können sich die Verzögerungswerte erheblich unterscheiden. So kann die Gesamtmasse eines Dumpers je nach Beladungszustand um mehrere Tonnen variieren. Während ein unbeladener Dumper lediglich die Fahrzeugmasse abbremsen muss, muss bei einem beladenen Dumper neben der Fahrzeugmasse auch noch die Masse der Ladung verzögert bzw. abgebremst werden. Letztere kann die Fahrzeugmasse um ein Mehrfaches übersteigen.

Der Maschinenbediener muss dies beachten und je nach Maschinenzustand bzw. Beladungszustand die Verzögerung mit dem Gaspedal bzw. Fahrpedal dosieren. Da die Auslegung des Fahrzeugs für die Verzögerung im Schubbetrieb häufig unter der Annahme erfolgt, dass das Fahrzeug im vollbeladenen Zustand verzögert werden soll, kann die Bremswirkung durch Schubbetrieb im unbeladenen Zustand zu stark sein, was zu erheblichen Komforteinschränkungen führen kann.

Baufahrzeuge, insbesondere Dumper, weisen aufgrund der geforderten Geländegängigkeit und der damit verbundenen Achshöhe einen hohen Schwerpunkt auf. Bei einer übermäßig starken Bremswirkung im Schubbetrieb im unbeladenen Zustand kann die Hinterachse abheben, wodurch ein sicheres Fahrverhalten beeinträchtigt wird.

Wenn jedoch andererseits die Auslegung des Verzögerungsverhaltens des Fahrzeugs im Schubbetrieb sich am unbeladenen Fahrzeug orientiert, ist die Verzögerungswirkung bei einem beladenen und damit erheblich schwereren Fahrzeug zu gering. Der Bediener muss dann häufiger die Betriebsbremse betätigen, was zu einem erhöhten Verschleiß führt.

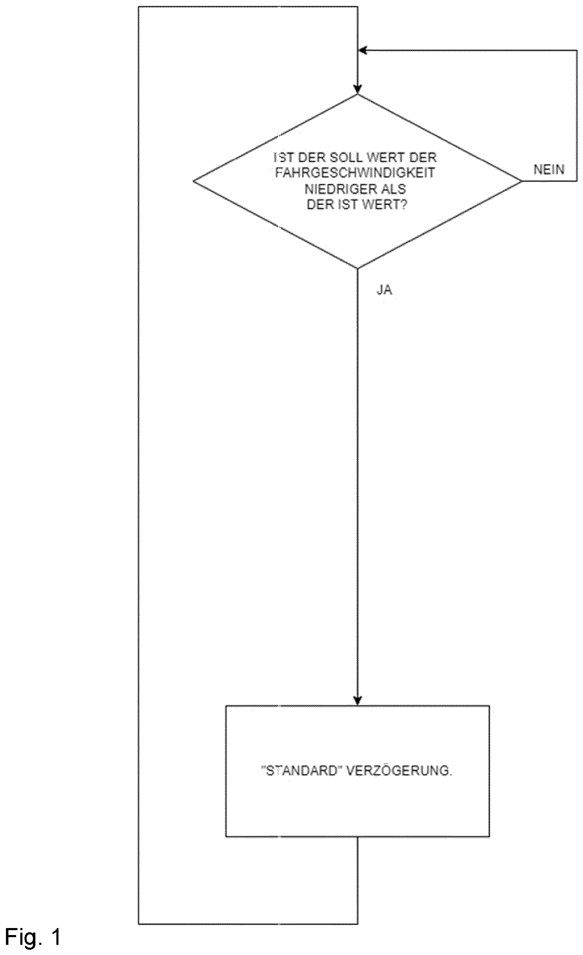

Fig. 1 zeigt beispielhaft den Funktionsablauf der Brems- bzw. Verzögerungswirkung im Schubbetrieb eines Fahrzeugs gemäß dem Stand der Technik. Wenn der Sollwert der Fahrgeschwindigkeit niedriger als der Istwert sein soll, ergibt sich durch die Auslegung des Fahrzeugs eine "Standard"-Verzögerung, die als Kompromiss gewählt werden muss, um das Fahrzeug im unbeladenen und im beladenen Zustand zuverlässig zu verzögern.

Aus der DE 10 2014 212 380 A1 sind ein Verfahren und eine Vorrichtung zum teilautomatisierten Betreiben eines Fahrzeugs auf Basis einer Fahrstrategie bekannt. Die Fahrstrategie kann eine Sollverzögerung umfassen, basierend auf der eine Ist-Verzögerung des Fahrzeugs geregelt werden kann.

Ein ähnliches Verfahren und eine ähnliche Vorrichtung sind in der DE 43 38 399 B4 offenbart.

Nachteilig beim Stand der Technik ist, dass unterschiedliche Fahrzeugbedingungen nicht berücksichtigt werden. Dadurch können - vor allem im unbeladenen Zustand - veränderte maximale Verzögerungswerte auftreten, die für den Maschinenbediener zu nicht vorhersehbaren Fahrzeugreaktionen führen können.

Der Erfindung liegt daher die Aufgabe zugrunde, die Verzögerungswirkung bei einem Fahrzeug innerhalb technischer Grenzen im Wesentlichen konstant zu halten.

Die Aufgabe wird gelöst durch eine Vorrichtung mit den Merkmalen von Anspruch 1 und durch ein Verfahren gemäß dem nebengeordneten Anspruch 9. Weiterhin wird ein Fahrzeug angegeben, das die erfindungsgemäße Vorrichtung nutzt. Vorteilhafte Ausgestaltungen sind in den abhängigen Ansprüchen angegeben.

Es wird eine Vorrichtung zum Verzögern eines Fahrzeugs angegeben, mit einer Soll-Geschwindigkeits-Vorgabeeinrichtung zum Vorgeben einer Soll-Geschwindigkeit des Fahrzeugs; mit einer Ist-Geschwindigkeits-Erfassungseinrichtung zum Bestimmen einer Ist-Geschwindigkeit des Fahrzeugs; mit einer Verzögerungs-Erfassungseinrichtung zum Erfassen einer Ist-Verzögerung des Fahrzeugs, wenn die Soll-Geschwindigkeit kleiner ist als die Ist-Geschwindigkeit; mit einer Verzögerungs-Vergleichseinrichtung zum Vergleichen der Ist-Verzögerung mit einer vorgebbaren Soll-Verzögerung und Bestimmen einer Abweichung der Ist-Verzögerung von der Soll-Verzögerung; und mit einer Fahrsteuerung zum Ansteuern eines Antriebs des Fahrzeugs, derart, dass die Abweichung der Ist-Verzögerung von der Soll-Verzögerung minimiert wird.

Mit der Vorrichtung ist es möglich, für das Fahrzeug annähernd gleichbleibende maximale Verzögerungswerte innerhalb der technischen Grenzen zu erreichen. In gewisser Weise handelt es sich somit um eine Verzögerungs-Regelung, bei der die Verzögerung des Fahrzeugs im Schubbetrieb auf einen vorgegebenen Maximalwert (Soll-Verzögerung) eingestellt wird. Die Verzögerung betrifft dabei nicht das Abbremsen des Fahrzeugs durch die zusätzlich vorhandene Bremsanlage (Betriebsbremse), sondern vielmehr das Abbremsen des Fahrzeugs im Schubbetrieb, bei dem der Fahrer über einen Fahrbefehlgeber vorgibt, dass die Fahrgeschwindigkeit reduziert werden soll. Dies entspricht analog z.B. einer Situation eines Kraftfahrzeugführers, der bei einer Fahrt vor einer roten Ampel den Fuß vom Gaspedal nimmt, ohne die Bremse zu betätigen, so dass das Fahrzeug im Schubbetrieb ausrollen kann und die Fahrgeschwindigkeit verringert wird.

Der Bediener kann dabei die Soll-Geschwindigkeits-Vorgabeeinrichtung betätigen, z.B. mit Hilfe einer geeigneten Bedieneinrichtung, wie z.B. einem Gaspedal oder einem Bedienhebel. Die Ist-Geschwindigkeit kann durch die Ist-Geschwindigkeits-Erfassungseinrichtung in geeigneter Weise bestimmt werden, z.B. mit Hilfe eines Drehzahlsensors an einem oder auch mehreren Rädern des Fahrzeugs oder an einer Achse des Fahrzeugs, am Getriebe oder am Fahrmotor. Ebenso können andere Sensoren wie Drehwinkelsensoren, Resolver, Encoder, Beschleunigungssensoren, GPS-Sensoren etc. eingesetzt werden, um die Ist-Geschwindigkeit des Fahrzeugs zu ermitteln.

Wenn die vom Bediener vorgegebene Soll-Geschwindigkeit niedriger als die Ist-Geschwindigkeit ist, liegt ein Verzögerungswunsch des Bedieners vor, das Fahrzeug soll also im Schubbetrieb abgebremst werden.

Neben einem reinen Abbremsen des Fahrzeugs kann dieser Wunsch auch einen Zustand umfassen, bei dem der Bediener einen Wechsel der Fahrtrichtung wünscht. Z.B. kann der Fahrer bei einer Vorwärtsfahrt des Fahrzeugs über einen Fahrbefehlgeber die Fahrtrichtung Rückwärts eingeben. In diesem Fall ist die Ist-Geschwindigkeit positiv und die Soll-Geschwindigkeit negativ. Die Verzögerungsregelung wäre in diesem Fall aktiv, bis das Fahrzeug annähernd zum Stillstand gekommen ist. Dann kann die Verzögerungsregelung enden und der Fahrantrieb das Fahrzeug in die Rückwärtsrichtung beschleunigen.

Die Verzögerungs-Erfassungseinrichtung kann die tatsächliche Verzögerung des Fahrzeugs (Ist-Verzögerung) erfassen, z.B. mit Hilfe eines Beschleunigungssensors. Ebenso ist es möglich, die Fahrzeuggeschwindigkeitsabnahme über einen gewissen Zeitraum zu messen und somit je Zeiteinheit zu berechnen, wodurch sich die Ist-Verzögerung berechnen lässt. Dabei ist auch eine inkrementale Ermittlung der Geschwindigkeitsänderung und damit der Verzögerung möglich.

Das Erfassen der Ist-Verzögerung kann selbstverständlich immer durchgeführt werden, nicht nur in einem Betriebszustand, in dem die Soll-Geschwindigkeit kleiner als die Ist-Geschwindigkeit ist. Für die Durchführung des Verfahrens ist es aber relevant, dass wenigstens in diesem Zustand das Erfassen der Ist-Verzögerung erfolgt, damit nachfolgend die Regelung der Verzögerung durchgeführt werden kann.

Die auf diese Weise ermittelte tatsächliche Ist-Verzögerung wird durch die Verzögerungs-Vergleichseinrichtung mit einer vorgebbaren Soll-Verzögerung verglichen. Die Soll-Verzögerung kann in verschiedener Weise vorgegeben werden, wie später noch erläutert wird. Insbesondere kann die Soll-Verzögerung einen maximalen Verzögerungswert darstellen, der nicht überschritten werden soll. Auf diese Weise kann gewährleistet werden, dass die Verzögerung des Fahrzeugs im Schubbetrieb nicht übermäßig stark ist und zu einem unsicheren Fahrverhalten führen kann. Andererseits kann durch Anstreben der vorgegebenen Soll-Verzögerung erreicht werden, dass das Fahrzeug mit einer ausreichenden, wirksamen Verzögerung abgebremst wird und nicht weitgehend ungebremst weiterfährt.

Die Verzögerungs-Vergleichseinrichtung bestimmt eine Abweichung der Ist-Verzögerung von der Soll-Verzögerung. Eine Fahrsteuerung ist vorgesehen, um diese Abweichung zu minimieren, so dass die Ist-Verzögerung möglichst genau die Soll-Verzögerung erreicht. Im optimalen Fall wird die Ist-Verzögerung exakt auf die Soll-Verzögerung geregelt. Die Fahrsteuerung ist dazu ausgebildet, den Antrieb des Fahrzeugs anzusteuern und auf diese Weise das Schubverhalten des Antriebs im Schubbetrieb des Fahrzeugs in geeigneter Weise zu verändern und einzustellen, wie später noch erläutert wird.

Die Soll-Geschwindigkeits-Vorgabeeinrichtung kann einen Fahrbefehlsensor aufweisen, zum Eingeben eines Verzögerungswunschs durch einen Bediener. Der Fahrbefehlsensor kann z.B. mit einem Gashebel gekoppelt sein, der vom Bediener betätigt wird, um die Fahrgeschwindigkeit zu erhöhen (Beschleunigungswunsch) oder um die Fahrgeschwindigkeit zu reduzieren (Verzögerungswunsch).

Die Soll-Geschwindigkeits-Vorgabeeinrichtung kann zusätzlich oder alternativ zu dem Fahrbefehlsensor eine weitere Eingabevorrichtung zum Erkennen einer gewünschten Fahrzeugverzögerung aufweisen. Dabei kann es sich z.B. um eine Bremspedalsensor, einen Bremsdrucksensor, einen Inchpedalsensor, einen Inchdrucksensor oder dergleichen handeln.

Ein Inchpedal dient dazu, eine Trennung des Fahrantriebs von Förder- und Hebeantrieben zu erreichen bzw. den Zusammenhang zwischen einer Gaspedalstellung (Fahrbefehlgeber) und der Fahrgeschwindigkeit zu beeinflussen. Das meist mit dem linken Fuß zu bedienende Inchpedal sorgt dafür, dass langsame Rangierfahrten mit geringer Leistungsaufnahme bei gleichzeitig hoher Ladekraft (mit hoher Leistungsaufnahme) möglich sind. Dabei wird bei hydrostatischen Antrieben der Ölfluss zum Hydraulikmotor an der Antriebsachse oder zu den Einzelradantrieben (z.B. Radnabenantriebe) verringert, wodurch die Fahrgeschwindigkeit sinkt. Bei Elektroantrieben wird die Leistung zum Elektromotor reduziert. Die übliche Hydraulikanlage, wie z.B. insbesondere das Hubwerk, kann weiterhin mit voller Hydraulikleistung versorgt werden.

Ein Verzögerungswunsch des Fahrzeugbedieners kann ergänzend oder alternativ zu dem Fahrbefehlsensor bei einem hydrostatischen Antrieb auch über den sogenannten Loadfaktor des Verbrennungsmotors ermittelt werden. Der Loadfaktor ist definiert als durchschnittliche Last geteilt durch die Spitzenlast über eine vorgegebene Zeitdauer. Er dient dazu, die Effizienz eines Antriebs zu messen. Im Falle einer Verzögerung fällt der Loadfaktor des Verbrennungsmotors stark ab, teilweise bis auf 0%. Durch den Abfall unter eine definierte Schwelle kann der Verzögerungswunsch des Bedieners erkannt werden, woraufhin die oben beschriebene Regelung der Verzögerung aktiv werden kann.

Bei elektrischen Antrieben kann der Verzögerungswunsch des Fahrzeugbedieners ergänzend oder alternativ zu dem Fahrbefehlsensor über die Leistungsabnahme bzw. Leistungsabgabe am Fahrmotor ermittelt werden. Wenn die am Fahrmotor abgenommene Leistung unter eine vordefinierte Schwelle fällt (Leistungsabnahme) oder gar der Fahrmotor generatorisch betrieben werden kann (Leistungsabgabe), kann der Verzögerungswunsch des Bedieners erkannt werden, so dass die Regelung der Verzögerung aktiviert wird.

Die Soll-Verzögerung kann vorgegeben sein als fest definierter Wert mit oder ohne Hysterese, oder als Korridor mit fest definiertem Minimal-Wert und fest definiertem Maximalwert, jeweils mit oder ohne Hysterese, oder abhängig von einer Stellung der Soll-Geschwindigkeits-Vorgabeeinrichtung.

Die Vorgabe der Soll-Verzögerung als fest definierter Wert stellt dann einen Maximalwert dar, der beim Verzögern des Fahrzeugs nicht überschritten werden darf. Die beschriebene Regelung stellt sicher, dass die Fahrsteuerung den Antrieb des Fahrzeugs derart ansteuert, dass der vorgegebene maximale Verzögerungswert nicht überschritten wird.

Die Vorgabe der Soll-Verzögerung als fest definierter Wert mit Hysterese setzt ebenfalls einen Maximalwert, wobei jedoch ein Toleranzfenster erlaubt wird. Z.B. kann der maximal zulässige Wert um einen bestimmten Prozentwert, z.B. 5%, überschritten werden.

Bei der Vorgabe als Korridor mit fest definiertem Minimal-Wert und fest definiertem Maximalwert soll sich die Soll-Verzögerung in einem Zielkorridor bewegen, der einerseits eine ausreichende Verzögerung gewährleistet und andererseits aber eine übermäßig starke Verzögerung verhindert. Auch hier können die Werte mit einer Hysterese definiert werden, um Überschreitungen zu erlauben und eine für den Bediener angenehme Regelung zu ermöglichen.

Alternativ ist es zudem möglich, die Soll-Verzögerung in Abhängigkeit von der Stellung der Soll-Geschwindigkeits-Vorgabeeinrichtung, also z.B. des Fahrbefehlsensors, vorzugeben. Das bedeutet, dass jeder Stellung der Vorgabeeinrichtung eine bestimmte Soll-Verzögerung zugeordnet wird, die zum Tragen kommt, wenn aus dieser Stellung eine Änderung der Soll-Geschwindigkeit, insbesondere eine Reduzierung der Soll-Geschwindigkeit, erfolgt und ein Abbremsen im Schubbetrieb vollzogen werden soll. Z.B. kann bei einer hohen Fahrgeschwindigkeit eine maximal mögliche Verzögerung vorgegeben werden (große Soll-Verzögerung), während bei einer niedrigen Fahrgeschwindigkeit eine geringere Verzögerung als Soll-Verzögerung ausreicht, um den Fahrkomfort zu erhöhen. Aufgrund der niedrigen Fahrgeschwindigkeit ist dies gefahrlos möglich.

Es ist somit möglich, dass die Vorgabe der Soll-Verzögerung durch die Soll-Verzögerungs-Bestimmungseinrichtung erfolgt, wenn die vom Bediener vorgegebene Soll-Geschwindigkeit kleiner als die Ist-Geschwindigkeit ist.

Der Antrieb des Fahrzeugs kann ein hydraulischer Antrieb sein, mit einer hydraulischen Fahrpumpe und einem hydraulischen Fahrmotor, wobei die Fahrpumpe und/oder der Fahrmotor ein veränderbares Schluckvolumen aufweisen und wobei durch die Fahrsteuerung das Schluckvolumen der Fahrpumpe und/oder des Fahrmotors veränderbar ist, um die Abweichung der Ist-Verzögerung von der Soll-Verzögerung zu minimieren. Bei einer Variante ist es möglich, dass der Fahrmotor ein unveränderliches Schluckvolumen aufweist, während die Fahrpumpe ein veränderbares Schluckvolumen aufweist, dass durch die Fahrsteuerung veränderbar ist.

Der hydraulische Antrieb kann somit einem üblichen Hydraulikantrieb (hydrostatischer Antrieb) entsprechen. Die Steuerung der Antriebsleistung erfolgt dabei durch Änderung des Schluckvolumens auf Seite der Fahrpumpe und/oder des Fahrmotors. Die Fahrsteuerung ist dabei ausgebildet, um das Schluckvolumen und dadurch die Antriebs- oder Verzögerungsleistung des Antriebs zu steuern. Auf diese Weise kann die tatsächliche Ist-Verzögerung des Fahrzeugs im Schubbetrieb sehr präzise an die Soll-Verzögerung angenähert werden.

Wird eine zu hohe Verzögerung gemessen, wird das Schluckvolumen der Fahrpumpe erhöht, wodurch diese mehr Ölmenge des Fahrmotors aufnehmen kann, wodurch das Druckniveau und die Bremsleistung sinken. Bei einer zu geringen Verzögerung wird hingegen das Schluckvolumen der Fahrpumpe reduziert, so dass das Druckniveau im Hydrauliksystem steigt.

Die Verstellung des Schluckvolumens kann, wie oben erläutert, zusätzlich oder alternativ auch durch Verstellung des Fahrmotors verändert werden, wobei dann die Regelung umgekehrt arbeitet: Um eine verringerte Verzögerung zu erreichen, wird das Schluckvolumen reduziert. Um die Verzögerung zu erhöhen, wird das Schluckvolumen erhöht.

Bei einer Variante kann der Antrieb ein hydraulischer Antrieb sein, mit einer hydraulischen Fahrpumpe und einem über eine Hydraulikverbindung mit der Fahrpumpe gekoppelten hydraulischen Fahrmotor, wobei der Antrieb eine verstellbare Druckbegrenzungseinrichtung aufweist, zum Einstellen eines maximalen Druckniveaus in der Hydraulikverbindung, und wobei die Druckbegrenzungseinrichtung durch die Fahrsteuerung ansteuerbar ist, um die Abweichung der Ist-Verzögerung von der Soll-Verzögerung zu minimieren.

Die Fahrsteuerung kann somit den Druck im Hydrauliksystem beeinflussen und auf diese Weise die Brems- bzw. Verzögerungswirkung des Hydraulikantriebs einstellen. Wird eine zu hohe Verzögerung gemessen, kann die verstellbare Druckbegrenzungseinrichtung des Fahrantriebs auf ein geringeres Druckniveau abgesenkt werden, wodurch das Druckniveau und die Bremsleistung sinken. Bei einer zu geringen Verzögerung wird hingegen der Druck der Druckbegrenzungseinrichtung erhöht. Die Druckbegrenzungseinrichtung kann dabei insbesondere ein Druckbegrenzungsventil aufweisen.

Bei einer Variante kann der Antrieb ein elektrischer Antrieb sein, mit einem elektrischen Fahrmotor, wobei durch die Fahrsteuerung ein Rückspeisestrom des Fahrmotors bei einem generatorischen Betrieb des Fahrmotors veränderbar ist, um die Abweichung der Ist-Verzögerung von der Soll-Verzögerung zu minimieren. Wenn in diesem Fall eine zu hohe Verzögerung gemessen wird, kann der im generatorischen Betrieb gewonnene Rückspeisestrom des Fahrmotors, der in eine Batterie oder über einen Bremswiderstand geführt wird, über einen den Fahrmotor steuernden Inverter reduziert werden. Dadurch sinkt die abgenommene Leistung am Fahrmotor, so dass auch die Bremsleistung sinkt. Bei einer zu geringen Verzögerung hingegen kann der Rückspeisestrom des Fahrmotors erhöht werden, so dass die Bremsleistung steigt.

Durch die Fahrsteuerung kann sowohl für den elektrischen Antrieb als auch für den hydraulischen Antrieb eine Rampenfunktion bereitgestellt werden, wobei die Rampenfunktion eine mehrstufige Drehzahlabnahme des Fahrmotors bestimmen kann, um die Abweichung der Ist-Verzögerung von der Soll-Verzögerung zu minimieren. Die mehrstufige Drehzahlabnahme kann sich dabei über einen bestimmten Zeitraum erstrecken, so dass die Verzögerungswirkung über diesen Zeitraum geregelt wird.

Insbesondere kann durch die veränderbare Rampenfunktion die Drehzahlabnahme des Fahrmotors gezielt gesteuert werden, so dass damit die erreichte Verzögerung verändert werden kann. Bei der Rampenfunktion wird die Soll-Drehzahl des Motors in Abhängigkeit von der Zeit um einen gewissen Wert abgesenkt, z.B. 1.000 U/s. Je höher die eingestellte Rampe ist, desto höher ist bei einem elektrischen Antrieb der Rückspeisestrom, was ein höheres Bremsmoment am Fahrmotor bewirkt und in weiterer Folge die Verzögerung des Fahrzeugs erhöht. Bei einer kleineren Rampe hingegen stellt sich ein kleinerer Rückspeisestrom ein, mit der Folge eines geringeren Bremsmoments und einer geringeren Verzögerung.

Bei einer Variante kann die Fahrsteuerung derart ausgebildet sein, dass der durch die Fahrsteuerung veränderbare Rückspeisestrom einen vorgegebenen Maximalwert nicht überschreitet. In diesem Fall erfolgt eine Limitierung des Stroms im Schubbetrieb, wodurch die Drehzahlabnahme des Fahrmotors gezielt gesteuert und die damit erreichte Verzögerung verändert werden kann. Bei der Stromlimitierung wird der maximale Strom mittels eines Soll-Wertes (mit oder ohne Hysterese) in seiner maximalen Höhe limitiert. Bei Bedarf kann auch eine Limitierung der minimalen Höhe vorgegeben werden. Wird im Zuge der Verzögerung der obere Maximal-Wert erreicht, reduziert der dem Motor zugeordnete Inverter den Strom, so dass dieser im Sollbereich verbleibt. Je höher der eingestellte Sollwert ist, desto höher ist der Rückspeisestrom, was ein höheres Bremsmoment am Fahrmotor bewirkt und in weiterer Folge die Verzögerung des Fahrzeugs erhöht. Bei einem kleineren Sollwert stellt sich ein kleinerer Rückspeisestrom ein, was ein geringeres Bremsmoment und eine geringere Verzögerung zur Folge hat.

Bei allen elektrischen Antrieben kann die Regelung bzw. Steuerung des Antriebs, insbesondere des Fahrmotors, über einen Inverter (Wechselrichter) erfolgen, der durch Pulsweitenmodulation (PWM) und bei Bedarf die Frequenz die Spannung für den Fahrmotor beeinflussen kann. Auf diese Weise lassen sich Drehzahl, Drehmoment und Drehrichtung des Fahrmotors einstellen. Unterschiedlich ist dann nur die Kenngröße, anhand derer der Inverter die entsprechenden Werte für die Pulsweitenmodulation und die Frequenz ermittelt.

Es wird ein Fahrzeug angegeben, mit einem Fahrabschnitt, der einen Fahrerstand und eine Antriebsvorrichtung aufweist, mit einem Ladeabschnitt, der eine Ladevorrichtung zum Aufnehmen einer Ladung aufweist, und mit einer Vorrichtung zum Verzögern des Fahrzeugs gemäß einer der oben beschriebenen Varianten. Dabei kann die Masse der durch die Ladevorrichtung aufnehmbaren Ladung größer sein als die Masse des Fahrzeugs ohne die Ladung. Das bedeutet, dass das Fahrzeug insbesondere zum Transportieren von großen Lasten ausgebildet ist. Die Nutzlast (Ladung) kann größer als die eigentliche Fahrzeugmasse sein. Ein typisches Beispiel für ein derartiges Fahrzeug ist ein Dumper, mit dem insbesondere Schüttgut auf einer Baustelle transportiert werden kann.

Gerade ein solches Fahrzeug kann die oben beschriebene Verzögerungs-Regelung sinnvoll nutzen, da die Verzögerung des Fahrzeugs im Schubbetrieb stets mit gleichen Verzögerungswerten erfolgt, unabhängig davon, ob das Fahrzeug beladen ist oder nicht. Jedenfalls hat der Beladungszustand des Fahrzeugs keinen Einfluss auf die Verzögerungswirkung im Schubbetrieb. Die Verzögerung kann entsprechend der oben beschriebenen Ausführungsformen in vielfältiger Weise verändert werden, z.B. durch Ändern der Soll-Verzögerung. Die erfindungsgemäße Verzögerungsregelung ist dann besonders effektiv, wenn die Differenz zwischen dem beladenen und dem unbeladenen Fahrzeug in Bezug auf die Fahrzeugmasse besonders groß ist.

Es wird ein Verfahren zum Verzögern eines Fahrzeugs angegeben mit den Schritten:
- Vorgeben einer Soll-Geschwindigkeit des Fahrzeugs durch einen Bediener;
- Bestimmen einer Ist-Geschwindigkeit des Fahrzeugs;
- Erfassen einer Ist-Verzögerung des Fahrzeugs, wenn die Soll-Geschwindigkeit kleiner als die Ist-Geschwindigkeit ist;
- Vergleichen der Ist-Verzögerung mit einer vorgebbaren Soll-Verzögerung und Bestimmen einer Abweichung der Ist-Verzögerung von der Soll-Verzögerung; und
- Ansteuern eines Antriebs des Fahrzeugs derart, dass die Abweichung der Ist-Verzögerung von der Soll-Verzögerung minimiert wird.

Diese und weitere Merkmale und Vorteile der Erfindung werden nachfolgend anhand von Beispielen unter Zuhilfenahme der begleitenden Figuren näher erläutert. Es zeigen:
- **Fig. 1**: den schematischen Verlauf bei einem Verzögerungsvorgang im Schubbetrieb gemäß dem Stand der Technik;
- **Fig. 2**: den schematischen Aufbau eines hydraulischen Fahrantriebs;
- **Fig. 3**: den schematischen Aufbau eines elektrischen Fahrantriebs;
- **Fig. 4**: den erfindungsgemäßen Funktionsablauf eines Verzögerungsvorgangs gemäß der Erfindung;
- **Fig. 5**: eine Variante zu dem Funktionsablauf von Fig. 4, mit einem Beschleunigungssensor; und
- **Fig. 6**: eine Variante des Funktionsablaufs mit Geschwindigkeitsabnahme/Drehzahlabnahme und Verzögerung je nach Fahrbefehlsensor-Signal.

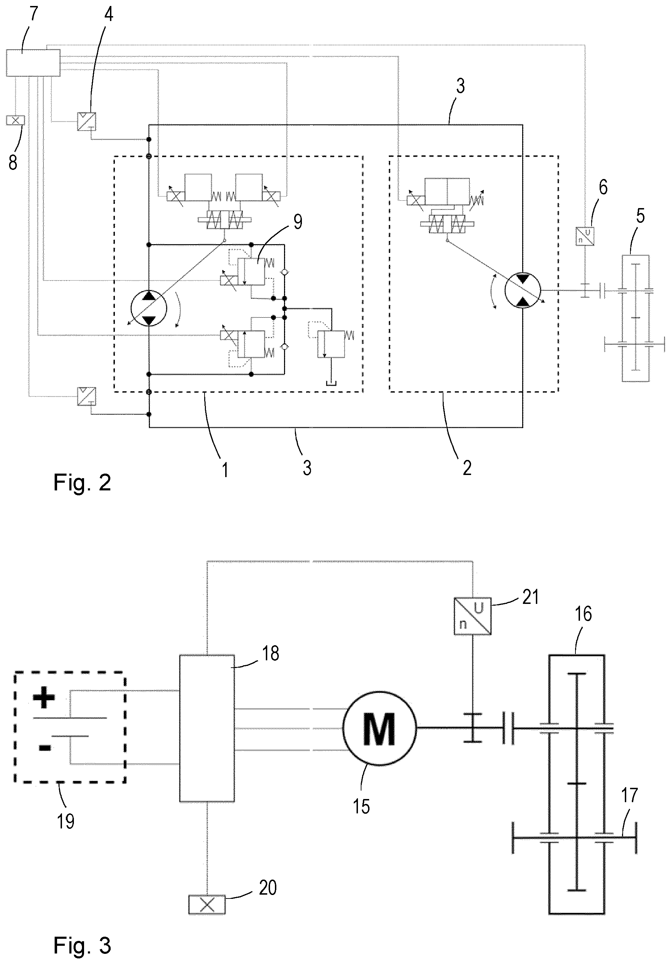

Fig. 2 zeigt den schematischen Aufbau eines hydraulischen Fahrantriebs als geschlossenem Kreislauf mit einem einstufigen Getriebe. Der Fahrantrieb kann insbesondere bei einem Fahrzeug, z.B. einem Baufahrzeug wie einem Dumper, eingesetzt werden.

Der Fahrantrieb weist eine hydraulische Fahrpumpe 1 und einen hydraulischen Fahrmotor 2 auf, die über eine Hydraulikverbindung 3 miteinander gekoppelt sind. Der Druck in der Hydraulikverbindung 3 kann über einen Drucksensor 4 überwacht werden, wobei auch andere Möglichkeiten zur Drucküberwachung bestehen. Dem Fahrmotor 2 nachgeschaltet ist ein einstufiges Getriebe 5, dessen Eingangsdrehzahl durch einen Drehzahlsensor 6 überwacht wird. Die Funktionen des Fahrantriebs werden durch ein Steuergerät 7 überwacht, das auch Funktionen einer Fahrsteuerung übernimmt.

An dem Steuergerät 7 ist ein als Soll-Geschwindigkeits-Vorgabeeinrichtung dienender Fahrbefehlsensor 8 angeschlossen, über den ein Bediener seinen Fahrwunsch (z.B. Fahrtrichtung, Geschwindigkeit) eingeben kann. Dabei kann der Fahrbefehlsensor 8 in geeigneter Weise mit einem Eingabegerät, z.B. einem Gashebel, einem Fahrtrichtungshebel etc. in an sich üblicher Weise gekoppelt sein.

Zur Begrenzung des von der Fahrpumpe 1 erzeugten Hydraulikdrucks ist eine Druckbegrenzung 9 mit einem regelbaren Druckventil vorgesehen. Alternativ kann die Druckbegrenzung 9 auch ein fest eingestelltes Druckventil aufweisen. Damit kann losgelöst von einer Leistungsabgabe oder -aufnahme von Fahrpumpe 1 oder Fahrmotor 2 der Druck in der Hydraulikverbindung 3 begrenzt werden.

Das Steuergerät 7 ist dazu ausgebildet, die Ist-Geschwindigkeit eines von dem hydraulischen Fahrantrieb angetriebenen Fahrzeugs zu ermitteln. Dies kann z.B. durch Auswertung des Drehzahlsensors 6 erfolgen. Alternativ sind auch andere Möglichkeiten gegeben, die oben im einleitenden Teil bereits beschrieben wurden. Z.B. kann die Fahrgeschwindigkeit (Ist-Geschwindigkeit) auch durch Drehzahlmessung an einer der Radachsen oder Rädern erfolgen. Ebenso ist eine Auswertung von GPS-Daten möglich, sofern die in geeigneter Genauigkeit vorliegen.

Zudem erhält das Steuergerät 7 über den Fahrbefehlsensor 8 eine vom Bediener vorgenommene Vorgabe für eine Soll-Geschwindigkeit.

Wenn die Soll-Geschwindigkeit kleiner ist als die Ist-Geschwindigkeit, also das Fahrzeug verzögert werden soll, wird eine Verzögerungsregelung aktiviert, wobei die Ist-Verzögerung des Fahrzeugs ermittelt wird. Dies ist z.B. mit Hilfe von Beschleunigungssensoren möglich oder auch mit Hilfe einer Auswertung der Drehzahländerung der Antriebsräder, der Antriebsachsen oder des Fahrmotors 2 über der Zeit.

Das Steuergerät 7 kann dann als Verzögerungs-Vergleichseinrichtung dienen und die Ist-Verzögerung mit einer vorgegebenen Soll-Verzögerung vergleichen. Daraufhin steuert das Steuergerät 7 den Fahrantrieb derart an, dass die Abweichung der Ist-Verzögerung von der Soll-Verzögerung minimiert wird. Auf diese Weise wird die tatsächliche Verzögerung des Fahrzeugs auf dem Niveau der vorgegebenen Soll-Verzögerung gehalten. Das Steuergerät 7 kann z.B. als zusätzliches Steuergerät auf einem Fahrzeug installiert werden (Fahrzeug ECU - Electronic Control Unit).

Die Ansteuerung des hydraulischen Fahrantriebs des Fahrzeugs kann mittels Regelung des Schluckvolumens der Fahrpumpe 1 und/oder des Fahrmotors 2 oder mittels einer Druckbegrenzung in der Hydraulikverbindung 3 unter Nutzung der Druckbegrenzung 9 erfolgen. Da diese Maßnahmen bereits oben im allgemeinen Teil ausführlich erläutert wurden, wird an dieser Stelle von einer Wiederholung abgesehen.

Fig. 3 zeigt den schematischen Aufbau eines elektrischen Fahrantriebs, der in einem Fahrzeug, insbesondere z.B. einem Baufahrzeug wie einem Dumper, eingesetzt werden kann.

Der elektrische Fahrantrieb weist einen elektrischen Fahrmotor 15 auf, der über ein einstufiges Getriebe 16 eine Antriebsachse 17 und damit nicht dargestellte Antriebsräder des Fahrzeugs antreiben kann.

Der für den Fahrmotor 15 vorgesehene elektrische Strom sowie die Spannung werden über einen Inverter (Wechselrichter 18) in geeigneter Weise zugeführt. Die elektrische Energie kann aus einem Netz bezogen werden oder von einer Batterie 19, die auf dem Fahrzeug installiert ist.

Die Ansteuerung des Fahrmotors 15 erfolgt mit Hilfe eines Fahrbefehlsensors 20, der als Richtungs- oder Fahrgeschwindigkeitsgeber dient. Im vorliegenden Fall kann er insbesondere als Teil einer Soll-Geschwindigkeits-Vorgabeeinrichtung dienen.

Die Drehzahl der Motorwelle des Fahrmotors 15 wird durch einen Drehzahlsensor 21 erfasst. Daraus kann - unter Berücksichtigung der entsprechenden Übersetzungsverhältnisse - die Ist-Geschwindigkeit des von dem Fahrmotor 15 angetriebenen Fahrzeugs bestimmt werden. Ergänzend oder alternativ zu dem Drehzahlsensor 21 können auch Drehzahlsensoren im Getriebe 16, an der Antriebsachse 17 oder an den Rädern angeordnet sein. Ebenso können anstelle oder in Ergänzung von Drehzahlsensoren auch Beschleunigungssensoren, Drehwinkelsensoren etc. verwendet werden.

Der Inverter 18 weist eine Steuerelektronik auf, die gleichzeitig als Steuergerät für den elektrischen Antrieb dienen kann und die entsprechenden Daten verarbeitet. Auch kann der Fahrbefehlsensor 20 den Fahrmotor 15 über den Inverter 18 ansteuern, wie in Fig. 3 dargestellt. Bei einer alternativen Ausführungsform können sie Signale auch zu einem Fahrzeugcontroller geführt werden, der die Signale auswertet und entsprechende Steuerbefehle an den Inverter 18 sendet, damit dieser die entsprechende Ansteuerung des Fahrmotors 15 vornimmt.

Ähnlich wie der oben mit Bezug auf Fig. 2 beschriebene hydraulische Antrieb kann auch der in Fig. 3 gezeigte elektrische Antrieb als Teil der erfindungsgemäßen Verzögerungsregelung dienen. Insbesondere ist es möglich, den elektrischen Antrieb im generatorischen Betrieb zu betreiben und dabei derart anzusteuern, dass das im generatorischen Betrieb auf die Antriebsachse 17 wirkende Verzögerungs- bzw. Bremsmoment eine Bremswirkung (Ist-Verzögerung) des Fahrzeugs erzeugt, die an eine vorgegebene Soll-Verzögerung angenähert ist.

Anstelle eines zentralen Fahrmotors 15 können dabei auch mehrere Fahrmotoren oder Einzelantriebe, z.B. Radnabenmotoren vorgesehen werden, die entsprechend angesteuert werden können, um die Verzögerungsregelung zu verwirklichen.

Dazu wurden oben im allgemeinen Teil bereits verschiedene Varianten hinsichtlich einer Verzögerung, einer Rampenfunktion und einer Stromlimitierung beschrieben, so dass auf die dortige Beschreibung Bezug genommen wird, um Wiederholungen zu vermeiden. Insbesondere kann durch Vorgabe eines Verzögerungswertes, einer geschwindigkeits- oder drehzahlabhängigen Rampenfunktion oder einer Limitierung des maximal zulässigen Rückspeisestroms die Soll-Verzögerung vorzugeben.

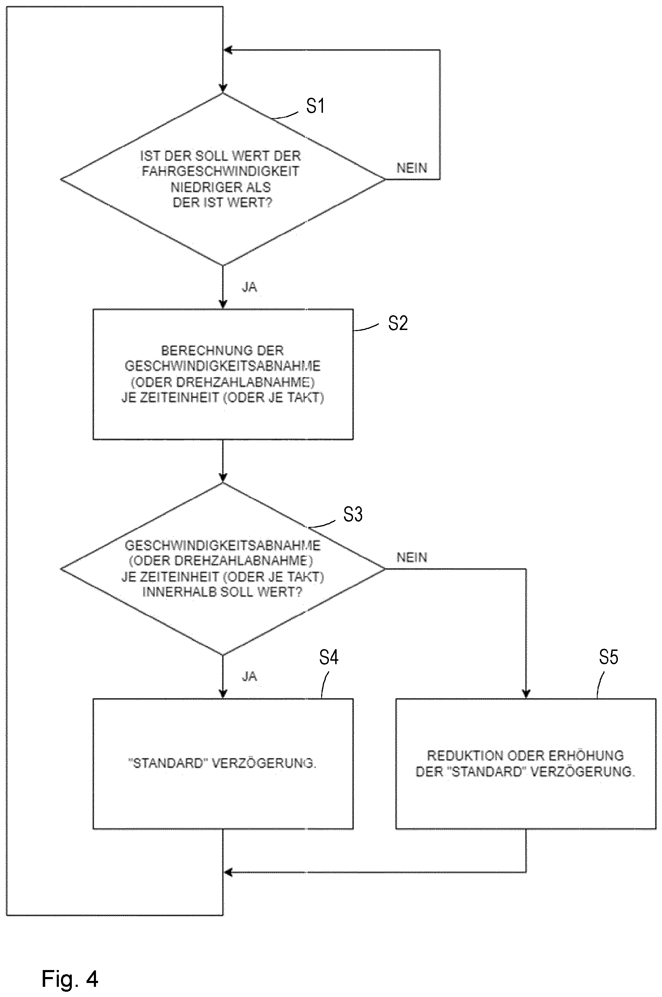

Fig. 4 zeigt ein Beispiel für den Funktionsablauf bei der erfindungsgemäßen Verzögerungsregelung.

In Schritt S1 wird geprüft, ob der Sollwert der Fahrzeuggeschwindigkeit niedriger ist als der Ist-Wert. Solange dies nicht der Fall ist, wird die Überwachung fortgeführt.

Wenn jedoch festgestellt wird, dass die vom Bediener vorgegebene Soll-Geschwindigkeit niedriger ist als die Ist-Geschwindigkeit, wird in Schritt S2 ein Wert für die Ist-Verzögerung des Fahrzeugs ermittelt. Dies kann im gezeigten Beispiel dadurch erfolgen, dass die Geschwindigkeitsabnahme bzw. Drehzahlabnahme je Zeiteinheit oder je Takt ermittelt wird. Alternativ kann die Ist-Verzögerung auch durch entsprechende Messaufnehmer, wie z.B. durch einen Beschleunigungssensor bestimmt werden.

Im Schritt S3 wird überprüft, ob die tatsächliche Ist-Verzögerung im Bereich des vorgegebenen Sollwerts für die Verzögerung (Soll-Verzögerung) liegt. Dieser Sollwert kann z.B. als eine Standardverzögerung vorgegeben sein und sollte dem Wert entsprechen, der für einen Schubbetrieb des Fahrzeugs als geeignet angesehen wird. Das bedeutet, dass er einen ausgewogenen Kompromiss zwischen guter Bremswirkung und Komfort für den Bediener und sicherem Fahrverhalten darstellen soll.

Wird in Schritt S3 festgestellt, dass die Geschwindigkeitsabnahme je Zeiteinheit, mithin also die Ist-Verzögerung, innerhalb des Sollwerts für die Verzögerung, also der Soll-Verzögerung liegt, besteht kein Regelungsbedarf, so dass das Fahrzeug mit der vorgesehenen "Standard"-Verzögerung in Schritt S4 abgebremst wird.

Wenn jedoch in Schritt S3 festgestellt wird, dass die Ist-Verzögerung nicht innerhalb des Sollwerts für die Soll-Verzögerung bzw. im Bereich des Sollwerts liegt, wird im Schritt S5 eine Verminderung oder Erhöhung der Standard-Verzögerung vorgenommen, indem der Antrieb des Fahrzeugs mit Hilfe der Fahrsteuerung angesteuert wird, wie beispielhaft anhand der Fig. 2 und 3 bereits erläutert. Auf diese Weise kann die Bremswirkung des Fahrzeugantriebs im Schubbetrieb verändert werden, um zu erreichen, dass die Ist-Verzögerung an die Soll-Verzögerung angenähert wird.

Die Formulierung "innerhalb des Sollwerts" für die Soll-Verzögerung bedeutet, dass jedenfalls der Soll-Wert nicht überschritten werden darf, weil dies zu einer zu starken Verzögerungswirkung führen würde. Ein Überschreiten der Soll-Verzögerung soll eine Reduktion der Standard-Verzögerung durch Ansteuern des Antriebs bewirken, so dass nachfolgend die Verzögerungswirkung geringer ist.

Die Bezeichnung "innerhalb des Sollwerts" kann weiterhin bedeuten, dass zumindest eine Mindestverzögerung erreicht werden soll bzw. dass der Sollwert für die Verzögerung in einem Korridor mit Mindestwert und Maximalwert definiert ist. Dies hat zur Folge, dass bei einer zu geringen Ist-Verzögerung unterhalb des Minimalwerts für die Soll-Verzögerung eine stärkere Verzögerung angestrebt werden soll. In diesem Fall wird im Schritt S5 die Standardverzögerung erhöht.

Im Ergebnis ist die in Fig. 4 gezeigte Verzögerungsregelung geeignet, die Ist-Verzögerung des Fahrzeugs im Bereich der vorgegebenen Soll-Verzögerung zu halten, sei es, dass die Soll-Verzögerung lediglich als Maximalwert (mit oder ohne Hysterese) oder als Korridor mit Minimal- und Maximalwert (jeweils mit oder ohne Hysterese) definiert ist.

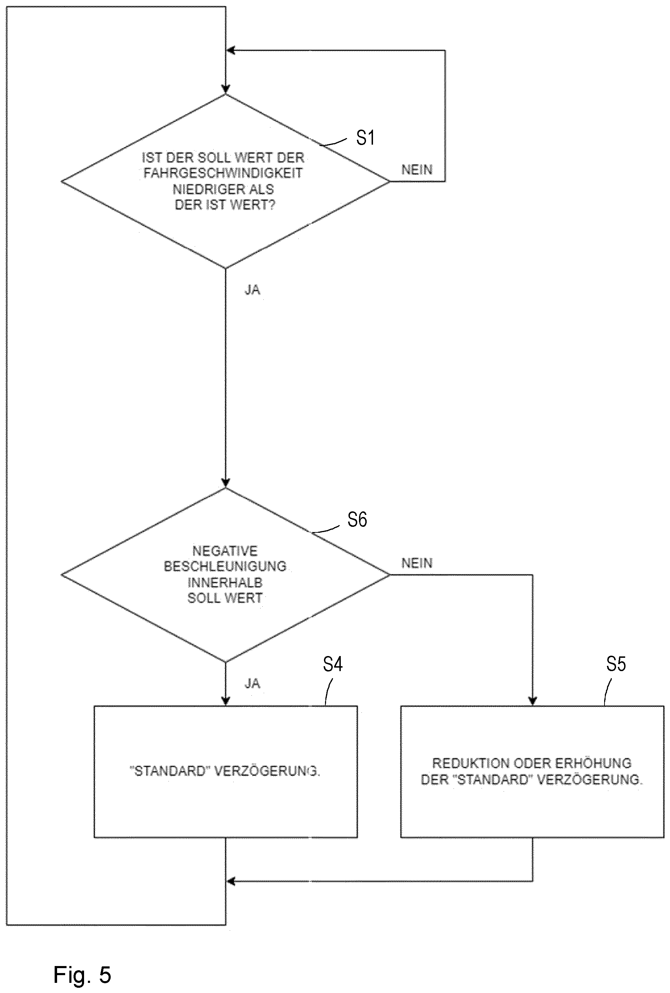

Fig. 5 zeigt eine Variante des Funktionsablaufs von Fig. 4, bei der die Ist-Verzögerung nicht durch Messung der Motor- oder Achsdrehzahl und Überwachung einer Änderung der Drehzahl über die Zeit erfolgt, sondern direkt mit Hilfe eines Beschleunigungssensors.

Dementsprechend wird im Schritt S6 das Messergebnis des Beschleunigungssensors ausgewertet und geprüft, ob die gemessene negative Beschleunigung (Ist-Verzögerung) innerhalb des Sollwerts für die Verzögerung (Soll-Verzögerung) liegt.

Die Konsequenzen dieser Auswertung ergeben sich mit den Schritten S4 und S5 wie bei dem Funktionsablauf von Fig. 4.

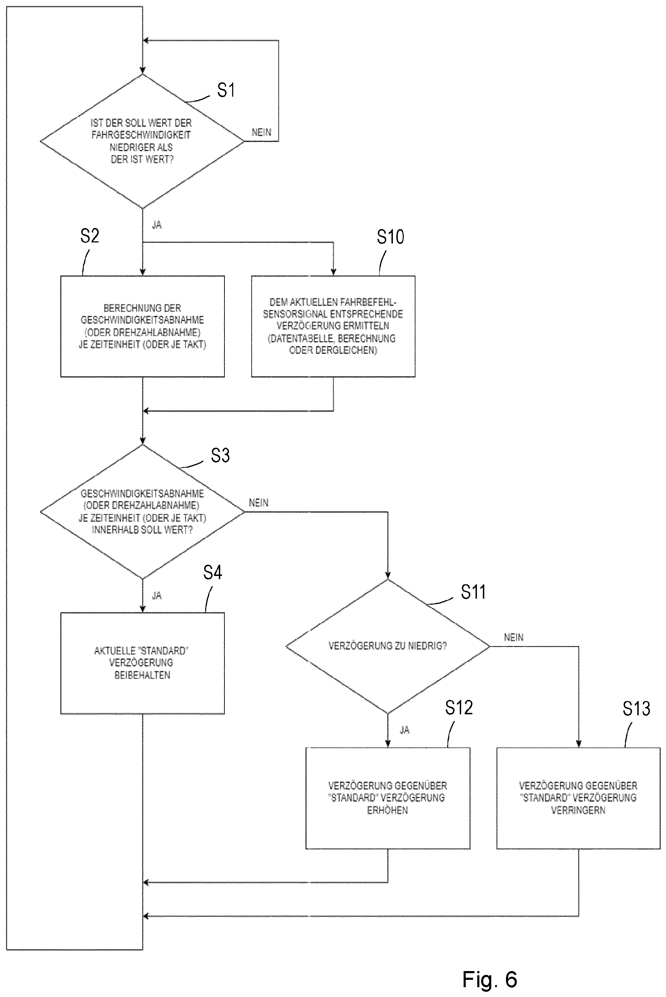

Fig. 6 zeigt eine weitere Variante des Funktionsablaufs. Dabei wird, wie bei dem Ablauf von Fig. 4, in Schritt S2 die Geschwindigkeits- bzw. Drehzahlabnahme je Zeiteinheit berechnet. Zudem wird in Schritt S10 eine dem aktuellen Fahrbefehlsensorsignal entsprechende Verzögerung (Soll-Verzögerung) ermittelt, z.B. auf Basis einer Datentabelle, einer Berechnung o.ä. Das bedeutet, dass die Soll-Verzögerung in Abhängigkeit von einer Stellung der Soll-Geschwindigkeits-Vorgabeeinrichtung (Fahrbefehlsensor) erfolgen kann. Wenn der Fahrbefehlsensor z.B. eine hohe Fahrgeschwindigkeit detektiert, kann entsprechend in einer Tabelle oder einer Berechnungsgrundlage eine hohe Verzögerung als Soll-Verzögerung vorgegeben werden. Bei einer niedrigen Fahrgeschwindigkeit und damit einem eher unkritischen Fahrverhalten kann eine niedrigere Soll-Verzögerung für den Schubbetrieb vorgegeben werden.

In Schritt S3 werden die Ergebnisse von Schritt S2 (Ist-Verzögerung) und S10 (Soll-Verzögerung) zusammengeführt und verglichen. Wenn die Ist-Verzögerung die Vorgaben für die Soll-Verzögerung erfüllt, kann die aktuelle Standardverzögerung beibehalten werden (Schritt S4).

Wenn jedoch in Schritt S3 festgestellt wird, dass die Ist-Verzögerung nicht in dem vorgegebenen Bereich für die Soll-Verzögerung liegt, wird im Schritt S11 geprüft, ob die Ist-Verzögerung zu niedrig ist, also z.B. unterhalb eines Minimalwerts für die Soll-Verzögerung liegt.

Wenn das der Fall ist, wird in Schritt S12 die vom Fahrantrieb bewirkte Verzögerung gegenüber der Standardverzögerung erhöht, insbesondere durch Ansteuern des Fahrantriebs mit Hilfe der Fahrsteuerung.

Wenn in Schritt S11 hingegen festgestellt wird, dass die Verzögerung nicht zu niedrig ist (und zusätzlich in Schritt S3 festgestellt wurde, dass die Ist-Verzögerung nicht innerhalb der Soll-Verzögerung liegt), kann daraus geschlussfolgert werden, dass die Ist-Verzögerung zu groß ist und oberhalb der Soll-Verzögerung liegt. In diesem Fall wird im Schritt S13 die durch den Fahrantrieb bewirkte Verzögerung gegenüber der Standardverzögerung verringert.

Die entsprechenden Maßnahmen zum Ändern der Standardverzögerung durch Ansteuern des Fahrantriebs (Hydraulikantrieb, Elektroantrieb) mit Hilfe der Fahrsteuerung wurde oben bereits ausführlich erläutert, so dass sich an dieser Stelle eine Wiederholung erübrigt.

## Patentansprüche

1. Vorrichtung zum Verzögern eines Fahrzeugs, mit
- einer Soll-Geschwindigkeits-Vorgabeeinrichtung (8) zum Vorgeben einer Soll-Geschwindigkeit des Fahrzeugs;
- einer Ist-Geschwindigkeits-Erfassungseinrichtung (6) zum Bestimmen einer Ist-Geschwindigkeit des Fahrzeugs;
- einer Verzögerungs-Erfassungseinrichtung zum Erfassen einer Ist-Verzögerung des Fahrzeugs, wenn die Soll-Geschwindigkeit kleiner als die Ist-Geschwindigkeit ist;
- einer Verzögerungs-Vergleichseinrichtung zum Vergleichen der Ist-Verzögerung mit einer vorgebbaren Soll-Verzögerung und Bestimmen einer Abweichung der Ist-Verzögerung von der Soll-Verzögerung; und mit
- einer Fahrsteuerung (7; 18) zum Ansteuern eines Antriebs (1, 2; 15) des Fahrzeugs, derart, dass die Abweichung der Ist-Verzögerung von der Soll-Verzögerung minimiert wird;
**dadurch gekennzeichnet, dass** die Soll-Verzögerung vorgegeben ist
- als fest definierter Wert mit oder ohne Hysterese, oder
- als Korridor mit fest definiertem Minimal-Wert und fest definiertem Maximalwert, jeweils mit oder ohne Hysterese, oder
- abhängig von einer Stellung der Soll-Geschwindigkeits-Vorgabeeinrichtung.

2. Vorrichtung nach Anspruch 1, wobei die Soll-Geschwindigkeits-Vorgabeeinrichtung einen Fahrbefehlsensor (8) aufweist, zum Eingeben eines Verzögerungswunschs durch einen Bediener.

3. Vorrichtung nach einem der vorstehenden Ansprüche, wobei
- der Antrieb ein hydraulischer Antrieb ist, mit einer hydraulischen Fahrpumpe (1) und einem hydraulischen Fahrmotor (2);
- die Fahrpumpe (1) und/oder der Fahrmotor (2) ein veränderbares Schluckvolumen aufweisen; und wobei
- durch die Fahrsteuerung das Schluckvolumen der Fahrpumpe (1) und/oder des Fahrmotors (2) veränderbar ist, um die Abweichung der Ist-Verzögerung von der Soll-Verzögerung zu minimieren.

4. Vorrichtung nach einem der vorstehenden Ansprüche, wobei
- der Antrieb ein hydraulischer Antrieb ist, mit einer hydraulischen Fahrpumpe (1) und einem über eine Hydraulikverbindung (3) mit der Fahrpumpe (1) gekoppelten hydraulischen Fahrmotor (2);
- der Antrieb eine verstellbare Druckbegrenzungseinrichtung (9) aufweist, zum Einstellen eines maximalen Druckniveaus in der Hydraulikverbindung (3); und wobei
- die Druckbegrenzungseinrichtung (9) durch die Fahrsteuerung (7) ansteuerbar ist, um die Abweichung der Ist-Verzögerung von der Soll-Verzögerung zu minimieren.

5. Vorrichtung nach Anspruch 1 oder 2, wobei
- der Antrieb ein elektrischer Antrieb ist, mit einem elektrischen Fahrmotor (15); und wobei
- durch die Fahrsteuerung (18) ein Rückspeisestrom des Fahrmotors (15) bei einem generatorischen Betrieb des Fahrmotors (15) veränderbar ist, um die Abweichung der Ist-Verzögerung von der Soll-Verzögerung zu minimieren.

6. Vorrichtung nach einem der vorstehenden Ansprüche, wobei
- durch die Fahrsteuerung (7; 18) eine Rampenfunktion bereitgestellt wird; und wobei
- die Rampenfunktion eine mehrstufige Drehzahlabnahme des Fahrmotors (2; 15) bestimmt, um die Abweichung der Ist-Verzögerung von der Soll-Verzögerung zu minimieren.

7. Vorrichtung nach Anspruch 5, wobei
- die Fahrsteuerung (18) derart ausgebildet ist, dass der durch die Fahrsteuerung (18) veränderbare Rückspeisestrom einen vorgegebenen Maximalwert nicht überschreitet.

8. Fahrzeug, mit
- einem Fahrabschnitt, der einen Fahrerstand und eine Antriebsvorrichtung aufweist;
- einem Ladeabschnitt, der eine Ladevorrichtung zum Aufnehmen einer Ladung aufweist; und mit
- einer Vorrichtung zum Verzögern des Fahrzeugs nach einem der vorstehenden Ansprüche.

9. Verfahren zum Verzögern eines Fahrzeugs, mit den Schritten
- Vorgeben einer Soll-Geschwindigkeit des Fahrzeugs;
- Bestimmen einer Ist-Geschwindigkeit des Fahrzeugs;
- Erfassen einer Ist-Verzögerung des Fahrzeugs, wenn die Soll-Geschwindigkeit kleiner als die Ist-Geschwindigkeit ist;
- Vergleichen der Ist-Verzögerung mit einer vorgebbaren Soll-Verzögerung und Bestimmen einer Abweichung der Ist-Verzögerung von der Soll-Verzögerung; und
- Ansteuern eines Antriebs des Fahrzeugs derart, dass die Abweichung der Ist-Verzögerung von der Soll-Verzögerung minimiert wird;
**dadurch gekennzeichnet, dass** die Soll-Verzögerung vorgegeben ist
- als fest definierter Wert mit oder ohne Hysterese, oder
- als Korridor mit fest definiertem Minimal-Wert und fest definiertem Maximalwert, jeweils mit oder ohne Hysterese, oder
- abhängig von einer Stellung der Soll-Geschwindigkeits-Vorgabeeinrichtung

## Claims

1. Apparatus for decelerating a vehicle, comprising
- a target speed specification device (8) for specifying a target speed of the vehicle;
- an actual speed detection device (6) for determining an actual speed of the vehicle;
- a deceleration detection device for detecting an actual deceleration of the vehicle if the target speed is less than the actual speed;
- a deceleration comparison device for comparing the actual deceleration with a specifiable target deceleration and determining a deviation of the actual deceleration from the target deceleration; and comprising
- a travel controller (7; 18) for activating a drive (1, 2; 15) of the vehicle in such a way that the deviation of the actual deceleration from the target deceleration is minimised;
**characterised in that** the target deceleration is specified
- as a fixedly defined value with or without hysteresis, or
- as a corridor with a fixedly defined minimum value and a fixedly defined maximum value, in each case with or without hysteresis, or
- in dependence upon a position of the target speed specification device.

2. Apparatus as claimed in claim 1, wherein the target speed specification device comprises a travel command sensor (8) for inputting a deceleration wish by an operator.

3. Apparatus as claimed in any one of the preceding claims, wherein
- the drive is a hydraulic drive having a hydraulic travel pump (1) and a hydraulic travel motor (2);
- the travel pump (1) and/or the travel motor (2) have a variable displacement; and wherein
- the travel controller can vary the displacement of the travel pump (1) and/or the travel motor (2) in order to minimise the deviation of the actual deceleration from the target deceleration.

4. Apparatus as claimed in any one of the preceding claims, wherein
- the drive is a hydraulic drive having a hydraulic travel pump (1) and a hydraulic travel motor (2) which is coupled to the travel pump (1) via a hydraulic connection (3);
- the drive has an adjustable pressure limiting device (9) for setting a maximum pressure level in the hydraulic connection (3); and wherein
- the pressure limiting device (9) can be activated by the travel controller (7) in order to minimise the deviation of the actual deceleration from the target deceleration.

5. Apparatus as claimed in claim 1 or 2, wherein
- the drive is an electric drive having an electric travel motor (15); and wherein
- a regenerative current of the travel motor (15) can be varied by the travel controller (18) during generator-driven operation of the travel motor (15) in order to minimise the deviation of the actual deceleration from the target deceleration.

6. Apparatus as claimed in any one of the preceding claims, wherein
- a ramp function is provided by the travel controller (7; 18); and wherein
- the ramp function determines a multi-stage rotational speed decrease of the travel motor (2; 15) in order to minimise the deviation of the actual deceleration from the target deceleration.

7. Apparatus as claimed in claim 5, wherein
- the travel controller (18) is designed such that the regenerative current which can be varied by the travel controller (18) does not exceed a specifiable maximum value.

8. Vehicle, comprising
- a travel section which has a driver's cab and a drive apparatus;
- a loading section which has a loading apparatus for receiving a load; and comprising
- an apparatus for decelerating the vehicle as claimed in any one of the preceding claims.

9. Method for decelerating a vehicle, comprising the steps of:
- specifying a target speed of the vehicle;
- determining an actual speed of the vehicle;
- detecting an actual deceleration of the vehicle if the target speed is less than the actual speed;
- comparing the actual deceleration with a specifiable target deceleration and determining a deviation of the actual deceleration from the target deceleration; and
- activating a drive of the vehicle in such a way that the deviation of the actual deceleration from the target deceleration is minimised;
**characterised in that** the target deceleration is specified
- as a fixedly defined value with or without hysteresis, or
- as a corridor with a fixedly defined minimum value and a fixedly defined maximum value, in each case with or without hysteresis, or
- in dependence upon a position of the target speed specification device.

## Revendications

1. Dispositif pour ralentir un véhicule, comprenant
un dispositif de prédéfinition de la vitesse de consigne (8) pour prédéfinir une vitesse de consigne du véhicule ;
un dispositif de détection de la vitesse réelle (6) pour déterminer une vitesse réelle du véhicule ;
un dispositif de détection de la décélération pour détecter une décélération réelle du véhicule lorsque la vitesse de consigne est inférieure à la vitesse réelle ;
un dispositif de comparaison de la décélération pour comparer la décélération réelle à une décélération de consigne pouvant être prédéfinie et déterminer un écart entre la décélération réelle et la décélération de consigne ; et
une commande de déplacement (7 ; 18) pour commander un entraînement (1, 2 ; 15) du véhicule de manière à minimiser l'écart entre la décélération réelle et la décélération de consigne ;
**caractérisé en ce que** la décélération de consigne est prédéfinie
sous la forme d'une valeur fixe avec ou sans hystérésis, ou
sous la forme d'un intervalle avec une valeur minimale fixe et une valeur maximale fixe, avec ou sans hystérésis, ou
en fonction d'une position du dispositif de prédéfinition de la vitesse de consigne.

2. Dispositif selon la revendication 1, dans lequel le dispositif de prédéfinition de la vitesse de consigne (8) comprend un capteur de commande de déplacement pour permettre à un opérateur de saisir une demande de décélération.

3. Dispositif selon l'une des revendications précédentes, dans lequel
l'entraînement est un entraînement hydraulique, avec une pompe de déplacement hydraulique (1) et un moteur de déplacement hydraulique (2) ;
la pompe de déplacement (1) et/ou le moteur de déplacement (2) présentent un volume d'absorption variable ; et dans lequel
la commande de déplacement permet de modifier le volume d'absorption de la pompe de déplacement (1) et/ou
du moteur de déplacement (2) afin de minimiser l'écart entre la décélération réelle et la décélération de consigne.

4. Dispositif selon l'une des revendications précédentes, dans lequel
l'entraînement est un entraînement hydraulique, avec une pompe de déplacement hydraulique (1) et un moteur de déplacement hydraulique (2) couplé à la pompe de déplacement (1) par une liaison hydraulique (3) ;
l'entraînement comporte un dispositif de limitation de pression réglable (9) pour régler un niveau de pression maximal dans la liaison hydraulique (3) ; et
le dispositif de limitation de pression (9) peut être commandé par la commande de déplacement (7) afin de minimiser l'écart entre la décélération réelle et la décélération de consigne.

5. Dispositif selon la revendication 1 ou 2, dans lequel
l'entraînement est un entraînement électrique, avec un moteur de déplacement électrique (15) ; et dans lequel
la commande de déplacement (18) permet de modifier un courant de réinjection du moteur de déplacement (15) lors d'un fonctionnement en mode générateur du moteur de déplacement (15) afin de minimiser l'écart entre la décélération réelle et la décélération de consigne.

6. Dispositif selon l'une des revendications précédentes, dans lequel
une fonction de rampe est fournie par la commande de déplacement (7 ; 18) ; et dans lequel
la fonction de rampe détermine une diminution en plusieurs étapes de la vitesse de rotation du moteur de déplacement (2 ; 15) afin de minimiser l'écart entre la décélération réelle et la décélération de consigne.

7. Dispositif selon la revendication 5, dans lequel
la commande de déplacement (18) est conçue de telle sorte que le courant de réinjection modifiable par la commande de déplacement (18) ne dépasse pas une valeur maximale prédéfinie.

8. Véhicule comprenant
une section de déplacement qui présente un poste de déplacement et un dispositif d'entraînement ;
une section de chargement qui présente un dispositif de chargement pour recevoir une charge ; et
un dispositif pour ralentir le véhicule selon l'une des revendications précédentes.

9. Procédé pour ralentir un véhicule, comprenant les étapes suivantes :
prédéfinir une vitesse de consigne du véhicule ;
déterminer une vitesse réelle du véhicule ;
détecter une décélération réelle du véhicule lorsque la vitesse de consigne est inférieure à la vitesse réelle ;
comparer la décélération réelle à une décélération de consigne pouvant être prédéfinie et
déterminer un écart entre la décélération réelle et la décélération de consigne ; et commander un entraînement du véhicule de telle sorte que l'écart entre la décélération réelle et la décélération de consigne soit minimisé ;
**caractérisé en ce que** la décélération de consigne est prédéfinie comme une valeur fixe avec ou sans hystérésis, ou
comme une plage avec une valeur minimale fixe et une valeur maximale fixe, chacune avec ou sans hystérésis, ou
en fonction d'une position du dispositif de prédéfinition de la vitesse de consigne.
